# EUROPEAN PATENT APPLICATION

(11) **EP 3 738 801 A1**
(43) Date of publication of application: **18.11.2020**
(21) Application number: 20165638.6
(22) Date of filing: 25.03.2020
(51) Int. Cl.: B60G 13/00, B60G 9/00

(54) **REAR SUSPENSION SYSTEM FOR A VEHICLE**

(30) Priority: 16.05.2019 GB 201906922
(71) Applicant: Nissan Motor Manufacturing (UK) Ltd, Bedford Bedfordshire MK43 0DB (GB)
(72) Inventor: NUTTING, Matt, Cranfield, Bedfordshire MK43 0DB (GB)

(57) **Abstract**

A twist beam axle assembly (103, Fig. 4) includes a twist beam (105); two wheel hubs (115); two dampers (119); and first and second bump stops (137). Each bump stop includes a first body (139) having a longitudinal axis (Z-Z), which is inclined with respect to the twist beam (105) and to a vertical axis (V-V); so that when the bump stop (137) is compressed, a component of force is transmitted along the twist beam (105) in a direction A or B (Fig. 4). The dampers and bump stops are inclined towards a longitudinal centre line of the vehicle by an angle of ten to thirty degrees. The bump stops may be co-axial with the dampers, and may be incorporated therein. The lower end of each damper may be connected to a respective wheel hub. Each bump stop may have a non-linear response on compression.

## Description

The present invention relates to a rear suspension system for a vehicle, and to a vehicle including the rear suspension system. In particular, the invention relates to a rear suspension system that includes a twist beam axle assembly.

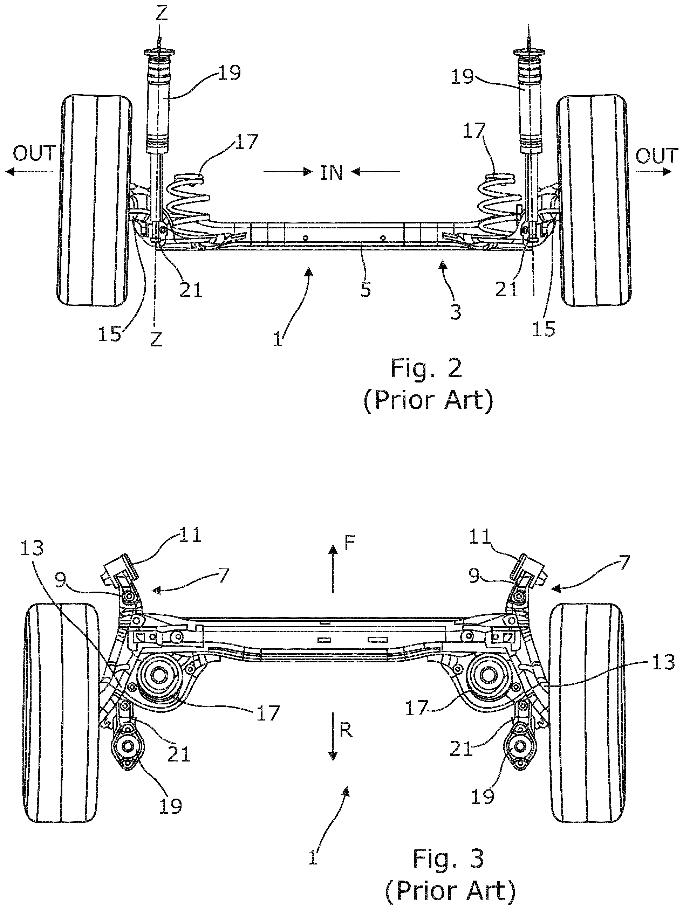

A twist beam axle assembly 3 (see Figures 2 and 3) for a conventional rear suspension 1 comprises a twist beam axle 5 in the form of a horizontal beam and a connector arm 7 at either end of the axle. The twist beam axle assembly 3 is generally H-shaped in plan view. A front end 9 of each connector arm 7 includes a bushing 11 which slots into a U-shaped bracket mounted on a vehicle body, and is bolted in place. The bushing 11 pivots relative to the bracket, and thus enables the twist beam axle 5 to pivot relative to an underside of the vehicle body. The bushing 11 has a significant effect on handling and ride as the bushing 11 deflects. At a rear end 13 of each connector arm, there is provided a wheel hub 15.

The conventional rear suspension system 1 also includes helical springs 17 and dampers 19. The helical springs 17 and dampers 19 are located towards each end of the twist beam axle 5. The dampers 19 and springs 17 are oriented vertically, with a longitudinal axis Z-Z (Fig. 2), and damp relative movement between the rear axle and a vehicle body. It is standard practice to mount the springs and dampers vertically, as this arrangement optimizes ride quality. Bump stops are also provided to cushion the impact on the vehicle body if the suspension is fully compressed; and to limit suspension travel. Such bump stops are often mounted in line with the dampers 19; and are therefore oriented vertically.

A problem with conventional twist beam rear suspension systems which are optimized for ride quality is that lateral loads that are produced when the vehicle is cornering produce a compliance effect; wherein opposing lateral forces act on the vehicle body and on axle 5 respectively. These loads are taken by bushings 11, as they are the sole mountings of the axle on the body. For vehicle handling, it is desirable for the bushings 11 to be stiff to reduce the compliance effect; whereas for vehicle ride comfort, it is desirable for the bushings 11 to be soft, to isolate road inputs. Accordingly, it is desirable to have an improved rear suspension system that is better able to cope with lateral loads experienced when driving the vehicle.

This problem has been addressed to some extent in EP2374639. The solution described in EP2374639 is to use helical compression springs which are wound to have an inclined axis of force which tilts as the spring is compressed. The rotation of this axis increases the lateral force on the axle, countering the compliance effect. However, with this solution it is necessary to provide different left and right springs; which means that the production numbers are lower for each type of spring - which in turn increases costs. There is also a risk that a spring can be fitted to the wrong side of the vehicle during assembly (e.g. a left spring where a right spring should be); which requires costly and disruptive rework. Furthermore, the handed springs are difficult to fit; and have more complex designs than conventional helical springs.

Another problem with conventional twist beam axle rear suspension systems 1 is that they include mounting brackets 21 for the dampers 19, which add to the mass and cost of the twist beam axle assembly 5. Also, the mounting brackets 21 are located in positions that are unsprung and can increase vibration. The greater the mass of the unsprung, uncontrolled, parts of the axle assembly 3, the greater the vibrations that can be generated; making the vehicle ride less comfortable, or requiring bigger and more complex dampers. There is also a problem with the current locations of the damper mounting brackets 21; in that they are necessarily inset from the tyre contact patches, so they give a relatively poor roll damping ratio.

The present invention seeks to mitigate at least one of the above-mentioned problems, or at least to provide an alternative rear suspension system and vehicle to known rear suspension systems and vehicles.

It is an object of the current invention to provide a rear suspension system for a vehicle that includes a twist beam axle assembly and at least one bump stop that is inclined in a transverse direction of the vehicle, thereby providing a component of force that acts along a twist beam axle. It is an object of the current invention to provide a rear suspension system for a vehicle that includes a twist beam axle assembly and at least one damper that is inclined in a transverse direction of the vehicle, thereby providing a component of force that acts along a twist beam axle. It is an object of the current invention to provide a rear suspension system for a vehicle that includes at least one damper and a twist beam axle assembly having at least one wheel hub, wherein a first end of the damper is attached directly to the wheel hub.

According to one aspect of the invention, there is provided a rear suspension for a vehicle according to claim 1. The invention improves road handling of the vehicle when cornering, since components of force act along the twist beam axle to counteract lateral forces acting at the wheels, reducing the compliance effect. This contrasts with a conventional bump stop arrangement, wherein the bump stops are arranged vertically, i.e. perpendicular with respect to the twist beam axle; and therefore no component of force is transmitted along the twist beam axle whilst cornering. Bump stops can be finely tuned for feedback force in more complex and progressive ways than helical springs; therefore, the arrangement provides further advantages over the prior art.

According to another aspect of the invention there is provided a rear suspension system for a vehicle, such as a motorcar.

The rear suspension system can include a twist beam axle assembly that is arranged to be pivotally attached to a vehicle body. The twist beam axle assembly includes a twist beam axle and first and second wheel hubs.

The rear suspension system can include a first bump stop arranged to limit pivoting movement of the twist beam axle assembly with respect to the vehicle body. The first bump stop can be arranged to be compressed, in use, as the twist beam axle assembly moves towards an underside of the vehicle body.

The rear suspension system can include a second bump stop arranged to limit pivoting movement of the twist beam axle assembly with respect to the vehicle body. The second bump stop can be arranged to be compressed, in use, as the twist beam axle assembly moves towards an underside of the vehicle body.

The first bump stop can include a first bump stop body having a first central longitudinal axis. The first central longitudinal axis can be inclined in a first direction; the arrangement being such that when the first bump stop is compressed, a component of force is transmitted along the twist beam axle. The first direction can be arranged such that the first bump stop is inclined towards the second wheel hub. In use, the first bump stop is inclined in a first transverse direction of the vehicle body. The first bump stop is usually arranged to generate a component of force in a vertical direction.

The second bump stop can include a second bump stop body having a second central longitudinal axis. The second central longitudinal axis can be inclined in a second direction; the arrangement being such that when the second bump stop is compressed, a component of force is transmitted along the twist beam axle. The second direction will usually be different from the first direction; and may be opposed thereto. The second direction can be arranged such that the second bump stop is inclined towards the first wheel hub. In use, the second bump stop is inclined in a second transverse direction of the vehicle body. The second bump stop is usually arranged to generate a component of force in the vertical direction.

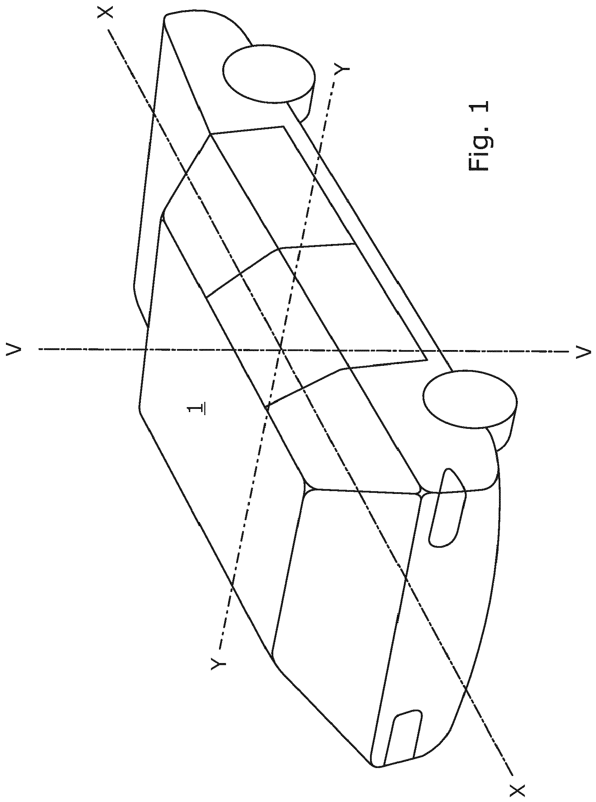

The central longitudinal axes of the first and second bump stops can be inclined towards one another. These axes may intersect at a point in space above the vehicle. These axes may also be parallel; and particularly, may be co-incident; when viewed along a transverse axis of the vehicle, parallel to Y-Y in Figure 1; and may be located at equal, but opposite, angles to a vertical axis through the longitudinal centre line of the vehicle; such as V-V in Figure 1.

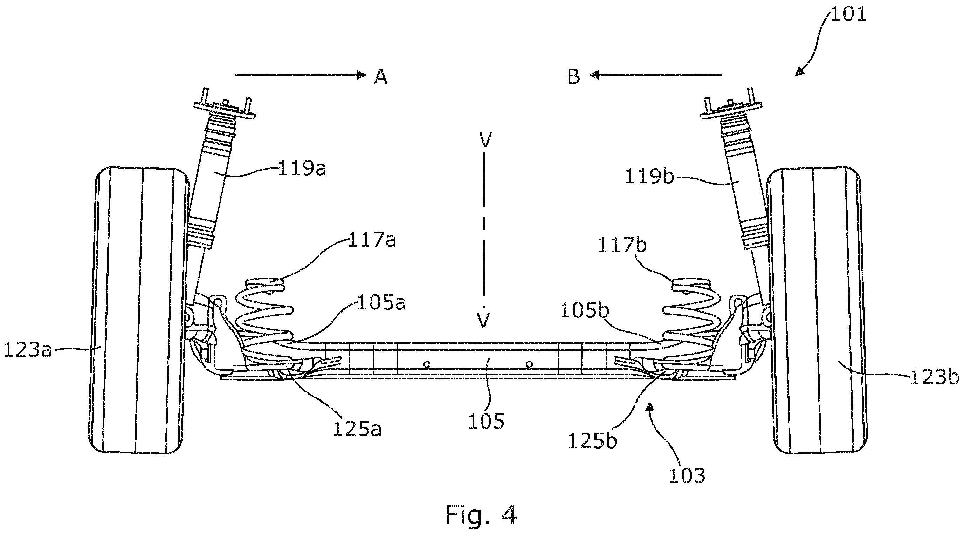

An upper end of the first bump stop body, at the first central longitudinal axis, can be arranged more inwardly in a transverse direction of the vehicle body (direction IN in Figure 2) than a lower end of the first bump stop body at the first central longitudinal axis. Thus the first transverse direction (A in Figure 4) is oriented inwardly.

An upper end of the second bump stop body, at the second central longitudinal axis, can be arranged more inwardly in the transverse direction of the vehicle body than a lower end of the second bump stop body, at the second central longitudinal axis. Thus the second transverse direction (B in Figure 4) is oriented inwardly. Accordingly, the horizontal distance between the upper ends of the first and second bump stop bodies is less than the horizontal distance between the lower ends of the first and second bump stop bodies.

The first bump stop can be located adjacent the first wheel hub. The second bump stop can be located adjacent the second wheel hub.

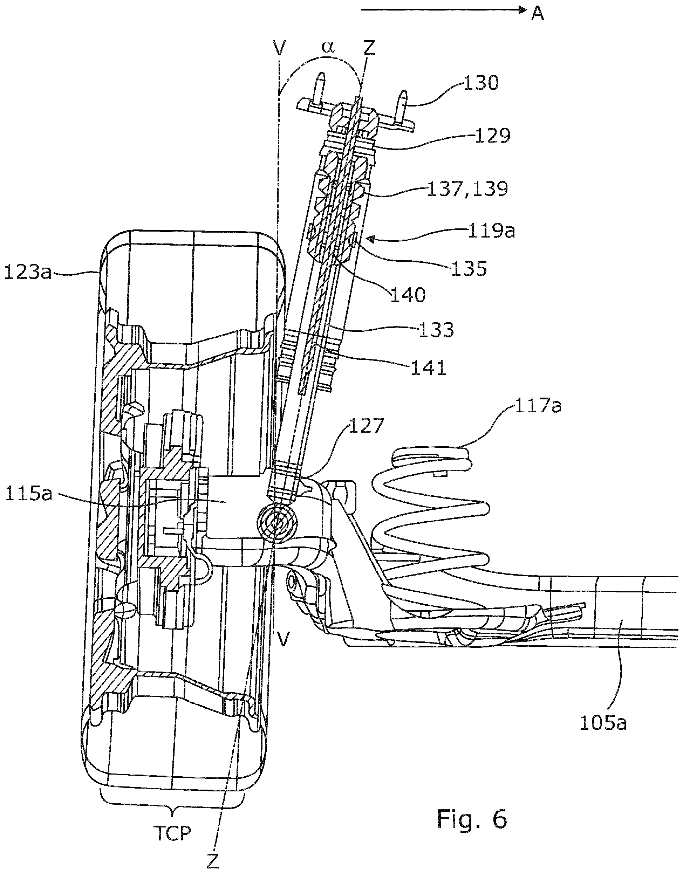

The central longitudinal axis of the first bump stop can be inclined by an angle α from the vertical (Fig. 6), wherein α is in the range 10° to 30°. The central longitudinal axis of the second bump stop can be inclined by an angle α from the vertical, wherein α is in the range 10° to 30°. The angle α would normally be the same for both bump stops.

The suspension system can include a first damper. The suspension system can include a second damper.

The first damper can be inclined in a first direction. An upper end of the first damper can be arranged more inwardly in a transverse direction of the vehicle body than a lower end of the first damper.

The second damper can be inclined in a second direction. An upper end of the second damper can be arranged more inwardly in the transverse direction of the vehicle body than a lower end of the second damper. Thus the horizontal distance between the upper ends of the first and second dampers is less than the horizontal distance between the lower ends of the first and second dampers.

At least one, and preferably each, of the first and second dampers can generate dynamic horizontal components of force in use. The horizontal components of force can act along the twist beam axle. At least one, and preferably each, of the first and second dampers will usually generate dynamic vertical components of force in use.

The first damper can be arranged to compress the first bump stop. The second damper can be arranged to compress the second bump stop.

The first bump stop can be arranged co-axially with the first damper. That is, the central longitudinal axis of the first bump stop body is arranged coaxially with a central longitudinal axis of the first damper. This provides a very compact arrangement, and the damper provides a means of transmitting the bump stop force to the twist beam axle; since the damper may be attached directly to its respective wheel hub.

The second bump stop can be arranged co-axially with the second damper. That is, the central longitudinal axis of the second bump stop body is arranged coaxially with a central longitudinal axis of the second damper. This provides a very compact arrangement, and the damper provides a means of transmitting the bump stop force to the twist beam axle; since the damper may be attached directly to its respective wheel hub.

The first damper can include a first dust cover, which is a tubular casing. The first bump stop can be located within the first dust cover. The first bump stop can be mounted within an upper end of the first dust cover at an upper end of the damper rod, for example adjacent to a connection with the vehicle body. The first damper can include a first piston. The first piston can be arranged to compress the first bump stop.

The second damper can include a second tubular casing. The second bump stop can be located within the second tubular casing. The second bump stop can be mounted towards an upper end of the second tubular casing, for example adjacent to a connection with the vehicle body. The second damper can include a second piston. The second piston can be arranged to compress the second bump stop.

Typically each of the first and second bump stops is compressed by its respective damper piston towards the end of its stroke. Thus the damper provides initial damping, and the bump stop provides a limit to relative suspension compression (pivoting) movement between the twist beam axle assembly and the vehicle body. Accordingly, the first and second bump stops are compressed as the twist beam axle assembly approaches its minimum allowable distance from an underside of the vehicle body.

A lower end of the first damper can be connected directly to the first wheel hub. A lower end of the second damper can be connected directly to the second wheel hub. This provides a significant advantage over conventional twist beam axle assemblies, since a separate mounting bracket for each damper is not required. Each damper can be bolted to its respective wheel hub. Generally speaking, it is desirable to remove mass from the twist beam axle assembly; since it is unsprung, and its mass can lead to increased vehicle vibration. Removing the brackets also reduces the cost and weight of the twist beam. This feature also improves the roll damping ratio, which improves the handling of the vehicle.

An upper end of the first damper can be arranged for connection to the vehicle body. An upper end of the second damper can be arranged for connection to the vehicle body. Each connection of damper to body may be bushed and/or pivoted, and secured with bolts.

A central longitudinal axis of the first damper can be inclined by an angle α from the vertical (Fig. 6), wherein α is in the range 10° to 30°. A central longitudinal axis of the second damper can also be inclined by an angle α from the vertical, wherein α is in the range 10° to 30°.

The first damper can include a first damper rod. The second damper can include a second damper rod. Each damper rod can be arranged to maintain the alignment of its respective bump stop within its respective damper. Each damper rod can be arranged along a central longitudinal axis of its respective damper; and passes through a central longitudinal bore formed in the respective bump stop.

At least one, and preferably each, of the first and second bump stops has a non-linear spring response. At least one, and preferably each, of the first and second bump stops can comprise a rubber and/or plastic moulded body. The body can be tuned for particular spring effect, in this case a nonlinear effect. By tuning the shape and material; and hence the compressibility; of the bump stops, it is possible to determine the response of the vehicle during cornering.

The twist beam axle assembly can include a first connector arm. The twist beam axle assembly can include a second connector arm. The first connector arm is located at a first end of the twist beam axle and the second arm may be located at a second end of the twist beam axle. The twist beam axle and first and second connector arms have a generally H-shaped configuration in a plan view. In use, a longitudinal axis of the twist beam axle extends in a transverse direction of the vehicle body.

A first portion of each of the first and second connector arms can project beyond the twist beam axle in a generally forward direction of the vehicle body (F in Figure 3). A second portion of each of the first and second connector arms can project beyond the twist beam axle in a generally rearward direction of the vehicle body (R in Figure 3). Each of the first and second connector arms can be curved such that at least one of the first and second portions on each connector arm is oriented outwards (OUT in Figure 2) - that is, towards outer edges of the vehicle body.

The first wheel hub can be mounted on the first connector arm. The first wheel hub can be mounted towards a distal end of the second portion of the first connector arm. The second wheel hub can be mounted on the second connector arm. The second wheel hub can be mounted towards a distal end of the second portion of the second connector arm.

The twist beam axle assembly can be pivotally attached to the vehicle body via the first and second connector arms in a manner such that the twist beam axle is arranged transversely to a central longitudinal axis of the vehicle body (X-X in Figure 1). The first portion of each of the first and second connector arms can include a pivoted mounting formation that is arranged for connection to a vehicle body pivotal mounting formation.

The suspension system can include a first helical spring. The twist beam axle assembly can include a first spring mounting plate. A lower end of the first helical spring can be mounted on the first spring mounting plate. An upper end of the first helical spring can be connected to the vehicle body. The first spring mounting plate can be connected to the first end of the twist beam axle and to the second portion of the first connector arm.

The suspension system can include a second helical spring. The twist beam axle assembly can include a second spring mounting plate. A lower end of the second helical spring can be mounted on the second spring mounting plate. An upper end of the second helical spring can be connected to the vehicle body. The second spring mounting plate can be connected to the second end of the twist beam axle and to the second portion of the second connector arm.

According to another aspect of the invention there is provided a vehicle, such as a motorcar, including: a vehicle body; and a rear suspension system according to any configuration described herein.

According to another aspect of the invention there is provided a vehicle, such as a motorcar, including: a vehicle body, and a rear suspension system; the rear suspension system including a twist beam axle assembly, and first and second bump stops. The twist beam axle assembly can include first and second connector arms and a twist beam axle. The twist beam axle can be pivotally attached to the vehicle body via the first and second connector arms. The arrangement can be such that the twist beam axle is arranged transversely to a central longitudinal axis of the vehicle body. The twist beam axle can extend across the width of the vehicle body. The first and second bump stops are arranged to limit pivoting movement of the twist beam axle with respect to the vehicle body. The first and second bump stops can be compressed in use, as the twist beam axle pivots towards the underside of the vehicle body. The first bump stop can include a first bump stop body having a first central longitudinal axis, the first central longitudinal axis being inclined with respect to the vehicle body in a first transverse direction of the vehicle. The second bump stop can include a second bump stop body having a second central longitudinal axis, the second central longitudinal axis being inclined with respect to the vehicle body in a second transverse direction of the vehicle. The rear suspension system can be arranged to any configuration described herein.

According to another aspect of the invention there is provided a rear suspension system for a vehicle, including: a twist beam axle assembly that is arranged to be pivotally attached to a vehicle body, the twist beam axle assembly including a twist beam axle and first and second wheel hubs; and first and second dampers arranged to damp relative movement of the twist beam axle with respect to the vehicle body. A first end of the first damper may be directly attached to the first wheel hub; and a first end of the second damper may be directly attached to the second wheel hub.

The invention provides a significant advantage over conventional twist beam axle assemblies, since a separate mounting bracket for each damper is not required in the twist beam axle assembly. Each damper can simply be bolted to its respective wheel hub. Generally speaking, it is desirable to remove mass from the twist beam axle assembly; since such mass is unsprung, and can lead to increased vehicle vibration. It is desirable to have as little material as possible in the unsprung area, because it is not controlled; and extra material can lead to higher vibration. Everything above the springs is said to be sprung, i.e. it is part of the vehicle body and is controlled. Removing the brackets for the lower ends of the dampers also reduces the cost and weight of the twist beam. The roll damping ratio is also improved, which improves vehicle handling.

An embodiment of the invention will now be described by way of example only with reference to the accompanying drawings in which:
Figure 1 is an isometric, schematic view of a vehicle; showing longitudinal (X-X), transverse (Y-Y), and vertical (V-V) axes thereof;
Figure 2 is a rear view of part of a prior art rear suspension system for a motorcar;
Figure 3 is a plan view of the prior art rear suspension system of Figure 2;
Figure 4 is a rear view of part of a rear suspension system for a motorcar in accordance with an embodiment of the invention;
Figure 5 is a plan view of the part of the rear suspension system of Figure 4;
Figure 6 is an enlarged cross-sectional view of part of the rear suspension system of Figure 4; and
Figure 7 is an exploded view of a damper used in the rear suspension system of Figures 4 to 6.

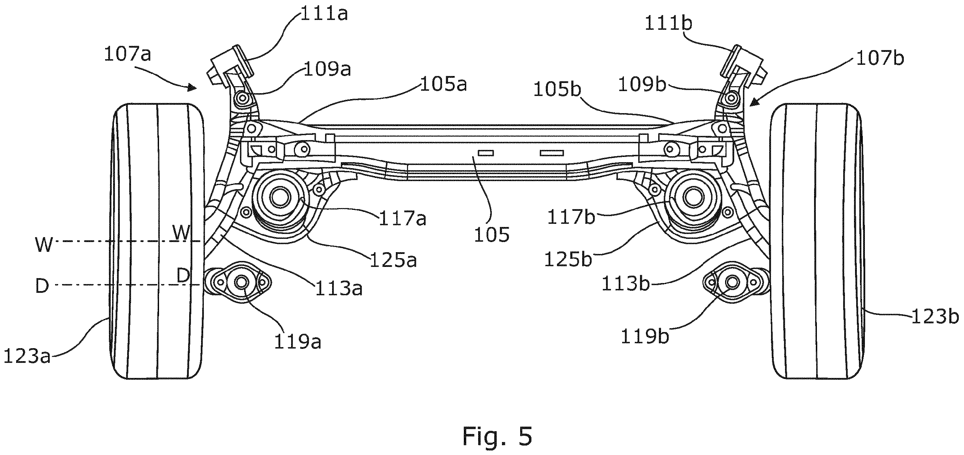

Figures 4 and 5 show a rear suspension 101 for a vehicle in accordance with an embodiment of the invention.

The rear suspension system 101 includes a twist beam axle assembly 103. The twist beam axle assembly 103 includes a twist beam axle 105 in the form of a horizontal beam and first and second connector arms 107a, 107b (Fig. 5). The first connector arm 107a is located at a first end 105a of the twist beam axle 105. The second connector arm 107b is located at a second end 105b of the twist beam axle 105. The connector arms 107a, 107b are arranged with respect to the twist beam axle 105 such that the twist beam axle assembly 103 is generally H-shaped in a plan view. A front end 109a, 109b of each connector arm includes a bushing 111a, 111b; each of which slots into a U-shaped bracket mounted on a vehicle body (not shown), and is bolted in place. The bushings 111a, 111b pivot relative to the bracket; and thus enable the twist beam axle 105 to pivot relative to an underside of the vehicle body. At a rear end 113a (Fig. 5) of the first connector arm, there is provided a first wheel hub 115a (Fig. 6). At a rear end 113b of the second connector arm, there is provided a second wheel hub 115b. A first wheel 123a is mounted onto the first wheel hub 115a; and a second wheel 123b is mounted onto the second wheel hub 115b.

The rear suspension system 101 includes first and second helical springs 117a and 117b. The first and second helical springs 117a, 117b are identical to one another; and are mounted at their lower ends on first and second mounting plates 125a, 125b respectively. Each of the first and second helical springs 117a, 117b is conventionally arranged in a vertical orientation. An upper end of each helical spring 117a, 117b is connected to the vehicle body. The first mounting plate 125a is located towards the first end 105a of the twist beam axle. The second mounting plate 125b is located towards the second end 105b of the twist beam axle.

The rear suspension system 101 includes first and second hydraulic dampers 119a, 119b (sometimes referred to as "shock absorbers"). The first and second dampers 119a, 119b are identical to one another. The dampers 119a and 119b are attached to the twist beam axle assembly 103 in the manner described below. The first and second dampers 119a, 119b are spaced apart; the first damper 119a being located adjacent the first wheel 123a, and the second damper 119b being located adjacent the second wheel 123b. The dampers 119a, 119b are aligned when viewed from an outer side of either of the wheels 123a, 123b, along a transverse axis of the vehicle.

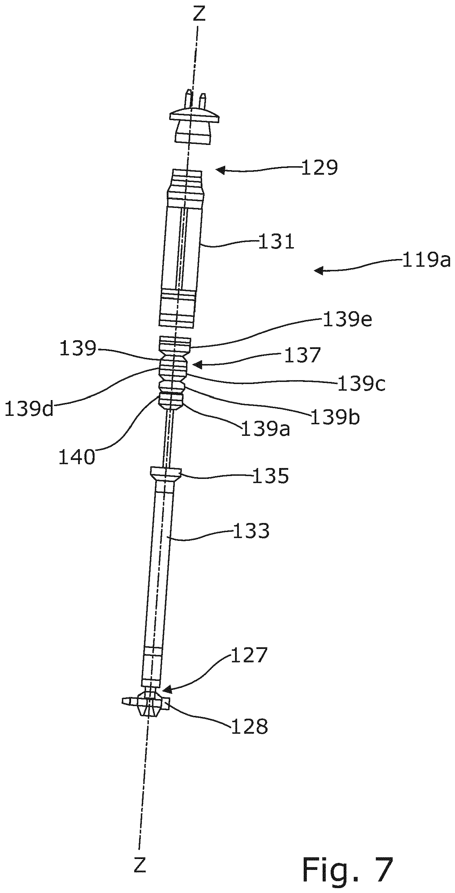

Each of the first and second dampers 119a, 119b has a first, lower, end 127 (Figure 6); and a second, upper, end 129. The lower end 127 of the first damper is fixed directly to the first wheel hub 115a. For example, a nut can be welded to the wheel hub 115a; and the lower end 127 of the damper can be fixed by a bolt 128 (Figure 7) to the first wheel hub 115a. The lower end 127 of the second damper is fixed directly to the second wheel hub 115b in the same fashion. By attaching the lower ends 127 of the dampers directly to their respective wheel hubs 115a, 115b, it is not necessary to have a separate mounting bracket (21 in prior art Figures 2 and 3) for the first and second dampers 119a, 119b to attach them to the twist beam axle assembly 103. This reduces the amount of material in the twist beam axle assembly 103; and therefore reduces the cost of the assembly 103. Furthermore, material is removed from an unsprung part of the vehicle; this helps to reduce vibration, and therefore to improve the vehicle's ride comfort.

Also, the new, more "spaced out" positions of the first and second dampers 119a, 119b help to improve the roll damping ratio of each damper 119a, 119b; which provides handling improvements. The lower mounts of the dampers may be at least partly located within an interior volume contained within the wheel rims, as shown in Figures 4 to 6. If the longitudinal axis Z-Z of each damper 119 passes through the tyre contact patch TCP, as shown in Fig.6, this allows a substantial increase in the roll damping ratio compared to the prior art (Fig. 2), where this axis meets the road surface inboard of the tyre and wheel rim on each side. (Although various definitions of tyre contact patch or road contact patch exist, the applicant considers that the full width of the treaded part of the tyre which contacts a substantially planar road surface during straight and level driving, as shown in Figure 6, is a suitable definition.) This arrangement also reduces the unsprung weight outboard of the suspension mountings, and reduces potential distortion of the twist beam between the damper mountings and the wheels. These effects both improve ride by reducing vibration, and therefore reducing the loads on the dampers.

The lower damper mounts may be located aft of the wheel mountings; as shown in Figure 5, where the lower damper mounts (and as shown, the upper damper mounts) are mounted on an axis D-D across the vehicle; whereas the wheel bearings are located on an axis W-W across the vehicle. This improves the ride ratio of the suspension, and makes a virtue of the necessity to provide a strong support for the wheel bearings without the lower damper mounting compromising the strength of the wheel mountings.

The upper end 129 of each of the first and second dampers is connected to the vehicle body, for example by bolts 130 (Fig. 6). Alternatively, the top (or upper) mounts may comprise fixing bolts 128 (Fig. 7), so that the top damper mounts are pivoted relative to a vehicle longitudinal axis like the lower mounts.

Each of the first and second dampers 119a, 119b has a tubular outer casing 131, a piston rod 133 and a piston 135 (see Figures 6 and 7). Figures 6 and 7 show a cross-section and an exploded view respectively of the first damper 119a; the second damper 119b is identical in its construction. A bump stop (sometimes referred to as a "bumper bound") 137 is located within the tubular outer casing 131. The bump stop is located towards an upper end of the tubular outer casing 131. The bump stop 137 limits relative pivoting movement between the twist beam axle 105 and the underside of the vehicle. The spring response of the bump stop 137 can be set by selecting an appropriate material or materials; and by tuning the shape of the bump stop 137. Bump stop 137 typically comprises a plastic or rubber moulded body 139 that has a non-linear spring response. The bump stop body 139 can include a plurality of sections, for example five sections 139a -139e are shown in Figure 7; which sections are connected end to end, giving the body 139 an elongate form. The bump stop body 139 has a central longitudinal bore 140. A damper rod 141 passes through the central longitudinal bore 140, and maintains the alignment of the bump stop 137 with respect to the tubular outer casing 131 and the tubular piston rod 133. The damper rod protects the damper against buckling.

It will be appreciated that the bump stop 137 is arranged co-axially with the damper 119. That is, a central longitudinal axis Z-Z of the bump stop 137 is arranged co-axially with a central longitudinal axis of the tubular outer casing 131 and of the tubular rod 133.

In use, the piston 135 acts on the bump stop 137, thereby compressing the bump stop 137 in order to damp movement of the vehicle body with respect to the wheels 123.

It can be seen in Figures 4 and 6 that each of the first and second dampers 119a, 119b; and hence each bump stop 137 located within the dampers; is mounted in an inclined manner, i.e. is not vertically arranged. The first damper 119a, and hence the bump stop 137 located within the first damper 119a, is inclined in a first transverse direction of the vehicle, towards the second wheel hub 115b (see arrow A in Figure 4). The second damper 119b, and hence the bump stop 137 located within the second damper 119b, is inclined in a second transverse direction of the vehicle, towards the first wheel hub 115a (see arrow B in Figure 4). Typically each of the first and second dampers 119a, 119b is inclined by an angle α relative to the vertical axis V-V (Fig. 6), wherein α is typically in the range 10° to 30°; and is typically around 20°.

The arrangement is such that a horizontal distance between upper ends of the bump stops 137 is less than a horizontal distance between lower ends of the bump stops. That is, the positions of the upper ends of the bump stops, at the central longitudinal damper axis Z-Z (Fig. 6), are located further inboard with respect to the vehicle than the lower ends of the bump stops, at the central longitudinal damper axis Z-Z. The effect of this arrangement is that when the dampers 119a, 119b and bump stops 137 are loaded, force components in the vertical and horizontal directions are generated. The horizontal force component acts along the twist beam axle 105. The horizontal force components are useful during cornering to help counteract lateral loads applied to the vehicle at the wheels. The arrangement improves lateral stiffness, the roll damping ratio, and handling of the vehicle. In one test, a roll damping ratio of 0.84 was measured for the conventional rear suspension arrangement shown in Figures 2 and 3, and a roll damping ratio of 1.07 was measured for the embodiment of Figures 4 to 7. In this instance, the higher number represents improved performance.

It will be appreciated by the skilled person that the invention is not limited to the described embodiments, and can include variations which are within the scope of the appended claims.

## Claims

1. A rear suspension system (101) for a vehicle (1), including: a twist beam axle assembly (103) that is arranged to be pivotally attached to a vehicle body, the twist beam axle assembly including a twist beam axle (105) and first and second wheel hubs (115a, 115b); and first and second bump stops (137) arranged to limit pivoting movement of the twist beam axle assembly (103) with respect to the vehicle body, the first and second bump stops (137) being arranged to be compressed, in use, as the twist beam axle assembly (103) moves towards an underside of the vehicle body; wherein the first bump stop (137) includes a first bump stop body (139) having a first central longitudinal axis (Z-Z), and the second bump stop (137) includes a second bump stop body (139) having a second central longitudinal axis (Z-Z); **characterized in that**:
the first central longitudinal axis is inclined in a first direction with respect to the twist beam axle, the arrangement being such that when the first bump stop (137) is compressed, a component of force is transmitted along the twist beam axle (105); and **in that** the second central longitudinal axis is inclined with respect to the twist beam axle (105) in a second direction, the arrangement being such that when the second bump stop (137) is compressed, a component of force is transmitted along the twist beam axle (105).

2. The system according to claim 1, wherein the first bump stop (137) is inclined towards the second wheel hub (115b); and the second bump stop (137) is inclined towards the first wheel hub (115a);
and wherein an upper end of the first bump stop body (139), at the first central longitudinal axis (Z-Z), is arranged more inwardly in a transverse direction (Y-Y) of the vehicle body than a lower end of the first bump stop body (139) at the first central longitudinal axis (Z-Z);
and wherein an upper end of the second bump stop body (139), at the second central longitudinal axis (Z-Z), is arranged more inwardly in the transverse direction (Y-Y) of the vehicle body than a lower end of the second bump stop body (139), at the second central longitudinal axis (Z-Z).

3. The system according to claim 1 or claim 2, wherein the central longitudinal axis (Z-Z) of at least one of the first and second bump stops (137) is inclined by an angle α from the vertical, wherein α is in the range 10° to 30°.

4. The system according to any one of the preceding claims, including first and second dampers (119a, 119b) having lower mountings (128) and upper mountings (130);
wherein the first damper (119a) is inclined in the first direction and the second damper (119b) is inclined in the second direction;
and wherein the first damper (119a) is arranged to compress the first bump stop (137), and the second damper (119b) is arranged to compress the second bump stop (137).

5. The system according to claim 4, wherein the first bump stop (137) is arranged co-axially with the first damper (119a), and the second bump stop (137) is arranged co-axially with the second damper (119b).

6. The system according to claim 4 or claim 5, wherein the first damper (119a) includes a first tubular casing (131) and a first piston (135), the first bump stop (137) being located within the first tubular casing, and the first piston (135) is arranged to compress the first bump stop; and the second damper (119b) includes a second tubular casing (131) and a second piston (135), the second bump stop (137) being located within the second tubular casing, and the second piston (135) is arranged to compress the second bump stop.

7. The system according to any one of claims 4 to 6, wherein at least one of the first and second dampers (119a, 119b) includes a damper rod (141) arranged to maintain the alignment of its respective bump stop (137) within the damper; and wherein the or each damper rod (141) is arranged along a central longitudinal axis (Z-Z) of its respective damper, and passes through a central longitudinal bore (140) formed in the respective bump stop.

8. The system according to any one of the preceding claims, wherein at least one of the first and second bump stops (137), has a non-linear spring response.

9. The system according to any one of the preceding claims, wherein the twist beam axle assembly (103) includes first and second connector arms (107a, 107b), the first connector arm being located at a first end (105a) of the twist beam axle (105), and the second arm being located at a second end (105b) of the twist beam axle.

10. The system according to any one of the preceding claims, wherein the suspension system includes first and second helical springs (117a, 117b) and the twist beam axle assembly (103) includes first and second mounting plates (125a, 125b); the first helical spring being mounted on the first mounting plate, and the second helical spring being mounted on the second mounting plate.

11. A vehicle (1), including: a vehicle body; and a rear suspension system (101) according to any one of the preceding claims.

12. A vehicle according to claim 11 when dependent on any one of claims 4 to 10, wherein the vehicle (1) is a wheeled vehicle, and the lower mounting (128) of each of the first and second dampers (119a, 119b) is located at least partly within an interior volume of a respective wheel rim (123a, 123b).

13. A vehicle according to claim 11 or claim 12 when dependent on any one of claims 4 to 10, wherein the vehicle (1) is a wheeled vehicle, and the longitudinal axes (Z-Z) of each of the first and second dampers (119a, 119b) pass through the road contact patches (TCP) of respective tyres mounted on respective wheel rims (123a, 123b) in use.

14. A vehicle according to claim 11 when dependent on any one of claims 4 to 10, wherein the longitudinal axes (Z-Z) of each of the first and second dampers (119a, 119b) intersect in space at a level above the damper top mounts (130).

15. A vehicle (1) according to any one of claims 11 to 14, when dependent on any one of claims 4 to 10, wherein the lower damper mountings (128) are located on an axis across the vehicle (D-D) which is aft of an axis across the vehicle (W-W) connecting the two rear wheel mountings.

16. A vehicle (1), including: a vehicle body; and a rear suspension system (101), the rear suspension system including a twist beam axle assembly (103) and first and second bump stops (137), wherein the twist beam axle assembly includes first and second connector arms (107a, 107b) and a twist beam axle (105), the twist beam axle being pivotally attached to the vehicle body via the first and second connector arms (107a, 107b); the arrangement being such that the twist beam axle (105) is arranged transversely to a central longitudinal axis (X-X) of the vehicle body, the first and second bump stops (137) being arranged to limit pivoting movement of the twist beam axle (105) with respect to the vehicle body; the first and second bump stops (137) being compressed, in use, as the twist beam axle (105) pivots towards the underside of the vehicle body; wherein the first bump stop (137) includes a first bump stop body (139) having a first central longitudinal axis (Z-Z), the first central longitudinal axis being inclined with respect to the vehicle body in a first transverse direction of the vehicle (Y-Y); and the second bump stop (137) includes a second bump stop body (139) having a second central longitudinal axis (Z-Z), and the second longitudinal axis is inclined with respect to the vehicle body in a second transverse direction (Y-Y) of the vehicle.
